# EUROPEAN PATENT APPLICATION

(11) **EP 4 580 127 A1**
(43) Date of publication of application: **02.07.2025**
(21) Application number: 24223598.4
(22) Date of filing: 30.12.2024
(51) Int. Cl.: H04L 12/14, H04L 12/46, H04L 45/00, H04L 45/74, H04M 15/00, H04W 4/24

(54) **METHOD AND APPARATUS FOR TREATMENT OF USER TRAFFIC WITH MULTIPLE LAN SERVICES AND SINGLE CHARGING**

(30) Priority: 28.12.2023 IN 202321089447; 23.12.2024 US 202418999196
(71) Applicant: Mavenir Systems, Inc., Richardson, TX 75081 (US)
(72) Inventor: Mishra, Abhishek, Yamare, Bangalore, 562125 Karnataka (IN); Padlikar, Vipin, Rajpalya, Bangalore, 560048 Karnataka (IN); Jindal, Tamanna, McKinney, Txas 75070 (US); R, SenthilKumar, Hosur, 635126 Tamil Nadu (IN)
(74) Representative: dompatent von Kreisler Selting Werner - Partnerschaft von Patent- und Rechtsanwälten mbB

(57) **Abstract**

Treatment of user traffic with multiple LAN Services and Single Charging. A network configuration for multiple N6/SGi LANs that are used to treat a given UE traffic. A system is configured for traffic routing and handling when a given session is to be treated by services offered in multiple N6-LANs. Load balancing for user traffic to different available servers if configured on N6 interface is provided. A health check mechanism of the available servers on the N6 interface is provided.

## Description

The present disclosure provides embodiments of systems, devices and methods for Radio Access Networks and Cloud Radio Access Networks.

### SUMMARY OF THE DISCLOSURE

There is provided a system comprising: a Session Management Function (SMF) connected to a User Plane Function (UPF) or a Control Plane (CP) connected to a User Plane (UP) by an N4 interface; the UP connected to an SGi Local Access Network (LAN) by an SGi interface; and the UPF connected a N6 LAN by an N6 interface, wherein the system is configured for traffic routing and handling a session for a plurality of N6 LANs. The UPF can be configured with an Access Point Name (APN)/Data Network Name (DNN) having two Virtual Routing and Forwarding (VRFs), a VRF1 (apn_Internal) and a VRF2 (apn_external). The UPF can be configured to send the traffic towards the N6 LAN or SGi LAN, the UPF being configured to insert a Virtual LAN (VLAN) ID into a VRF packet, wherein the VLAN ID is configured to inform a server for a specific service and treatment. The UPF can be configured to insert a Media Access Control (MAC) address. The CP can be configured such that the APN is configured to have multiple N6 LAN interfaces or multiple SGi LAN interfaces. The UPF can be configured to at least, in the Uplink, send the packet towards a first server with a MAC1 as Source, a MAC2 as destination and a VLAN ID=101 as the VLAN, the first server being configured to process the packet, set the VLAN as VLAN 2 and then route the packet back to the UPF by virtue of the MAC; and match the VLAN 2 packet, process the packet again, and re-create and forward the packet to a second server with a VLAN ID=3 as the VLAN. The UPF can be configured to at least, in the Downlink: process a packet sent by a second server towards the UPF; and forward the packet towards a first server by setting the MAC as MAC3 for a Source MAC, setting the MAC as MAC4 for a Destination MAC, and set the VLAN as VLAN ID=5, wherein the first server processes the packet, sets VLAN ID as 400 and then is routed back to the UPF. The system can be configured for load balancing user traffic to different available servers when configured on the N6 interface or the SGi interface. The system can be configured to prevent double charging of traffic when the traffic passes through the plurality of N6 or SGi interfaces. The system can be configured to execute a health check for available servers on the N6 interface.

The present disclosure includes a method comprising for a system Session Management Function (SMF) connected to a User Plane Function (UPF) or a Control Plane (CP) connected to a User Plane (UP) by an N4 interface; the UP connected to an SGi Local Access Network (LAN) by an SGi interface; the UPF connected a N6 LAN by an N6 interface, the method comprising configuring the system for traffic routing and handling a session with a plurality of N6-LANs. The method can comprise configuring the UPF with an Access Point Name (APN)/Data Network Name (DNN) having two Virtual Routing and Forwarding (VRFs) comprising a VRF1 (apn_Internal) and a VRF2 (apn_external). The method can comprise: inserting, by the UPF, a Virtual LAN (VLAN) ID into a VRF packet, wherein the VLAN ID is configured to inform a server for a specific service and treatment; and sending, by the UPF, the traffic towards the N6 LAN or SGi LAN. The method can comprise: inserting, by UPF, a Media Access Control (MAC) address. The method can comprise: configuring the CP so that the APN has multiple N6 LAN interfaces or multiple SGi LAN interfaces. The method can comprise: sending, by the UPF in the Uplink, the packet towards, a first server with a MAC1 as Source , a MAC2 as destination and a VLAN ID=101 as the VLAN, the first server being configured to process the packet, set the VLAN as VLAN 2 and then route the packet back to the UPF by virtue of the MAC; matching the VLAN 2 packet, processing the packet again; and re-creating and forwarding the packet to a second server with a VLAN ID=3 as the VLAN. The method can comprise: processing, by the UPF in the Downlink, a packet sent by a second server towards the UPF; forwarding the packet towards a first server by setting the MAC as MAC3 for a Source MAC; and setting the MAC as MAC4 for a Destination MAC and setting the VLAN as VLAN ID=5, wherein the first server processes the packet, sets VLAN ID as 400 and then is routed back to the UPF. The method can comprise: load balancing user traffic to different available servers when configured on the N6 interface or the SGi interface. The method can comprise: preventing double charging of traffic when the traffic passes through the plurality of N6 or SGi interfaces. The method can comprise: executing a health check for available servers on the N6 interface.

### BRIEF DESCRIPTION OF THE DRAWINGS

Non-limiting and non-exhaustive embodiments are described with reference to the following drawings. In the drawings, like reference numerals refer to like parts throughout the various figures unless otherwise specified. For a better understanding, reference can be configured to be made to the following Detailed Description, which is to be read in association with the accompanying drawings.

Various embodiments and implementations now will be described more fully hereinafter with reference to the accompanying drawings, which form a part hereof, and which show, by way of illustration, specific embodiments by which the innovations described herein can be practiced. The embodiments can, however, be embodied in many different forms and should not be construed as limited to the embodiments and implementations set forth herein; rather, these embodiments and implementations are provided so that this disclosure will be thorough and complete, and will fully convey the scope of the embodiments and implementations to those skilled in the art. Among other things, the various embodiments and implementations can be methods, systems, media, or devices. The following detailed description is, therefore, not to be taken in a limiting sense.

Throughout the specification and claims, the following terms take the meanings explicitly associated herein, unless the context clearly dictates otherwise. The term "herein" refers to the specification, claims, and drawings associated with the current application.

In addition, as used herein, the term "or" is an inclusive "or" operator, and is equivalent to the term "and/or" unless the context clearly dictates otherwise. The term "based on" is not exclusive and allows for being based on additional factors not described, unless the context clearly dictates otherwise. In addition, throughout the specification, the meaning of "a", "an" and "the" include plural references. The meaning of "in" includes "in" and "on."
FIG. 1A shows a network architecture.
FIG. 1B shows a network architecture.
FIG. 1C shows a network architecture.
FIG. 1D shows a network architecture.
FIG. 1E shows a network architecture.
FIG. 2 shows an implementation of a network architecture and flow.
FIG. 3 shows an implementation of a network architecture and flow.
FIG. 4A shows an implementation of a network architecture and flow.
FIG. 4B shows an implementation of a Sample IP packet with payload.
FIG. 5 shows an implementation of a network architecture and flow.
FIG. 6 shows an implementation of a network architecture and flow.
FIG. 7A shows an implementation of a network architecture and flow.
FIG. 7B shows an implementation of a network architecture and flow.
FIG. 8 shows an implementation of a flow chart for handling UL traffic.
FIG. 9 shows an implementation of a network architecture and flow.
FIG. 10 shows an implementation flow for DL traffic.
FIG. 11 shows an implementation of a network architecture and flow.

### DETAILED DESCRIPTION

### Introduction

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

### Acronyms

- 3GPP: 3rd Generation Partnership Project
- 5G: 5th Generation
- 5GC: 5G Core Network
- 5GS: 5G System
- AMF: Access and Mobility Management Function
- APN: Access Point Name
- BGP: Border Gateway Protocol
- CP: Control Plane
- DNN: Data Network Name
- GTP: GPRS Tunneling Protocol
- GPRS: General packet radio service
- MED: Multi Exit Discriminator
- MAC: Media Access Control
- MME: Mobility Management Entity
- PDR: Packet Detection Rule
- PFCP: Packet Forwarding Control Protocol
- PFCP: Packet Forwarding Control Protocol
- QER: Quality of service Enforcement Rule
- SMF: Session Management Function
- UDSF: Unstructured Data Storage Function
- UL: Uplink
- UP: User Plane
- UPF: User Plane Function
- URRq: Usage Reporting Rule
- UP: User Plane
- UPF: User Plane Function
- VLAN: Virtual Local Area Network
- VRF: Virtual Routing and Forwarding

### References

[1] 3GPP TS 23.501v18.2.0: "System Architecture for the 5G System" (2023)
[2] 3GPP TS 23.502v18.2.0:"Procedures for the 5G System"(2023)
[3] 3GPP TS 29.244v18.2.0:" Interface between the Control Plane and the User Plane Nodes ", (2023)
[4] RFC 5880, "Bidirectional Forwarding Detection" (BFD)

### RAN Architectures

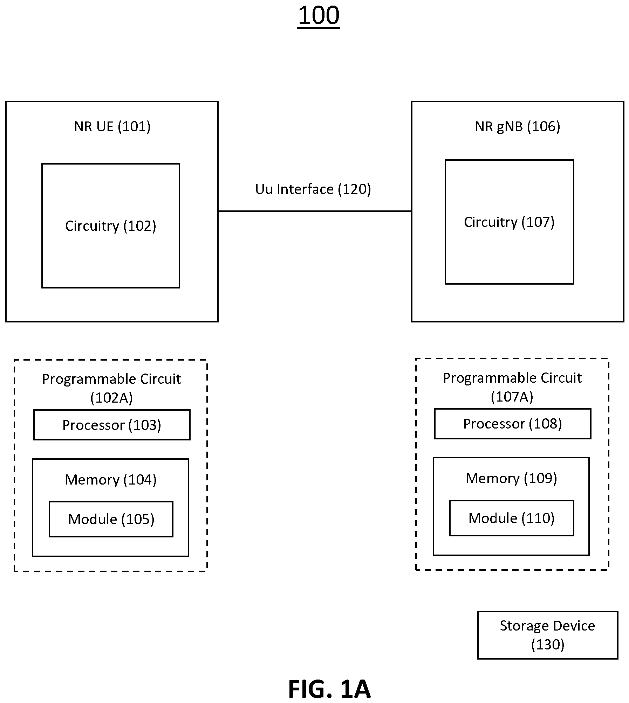

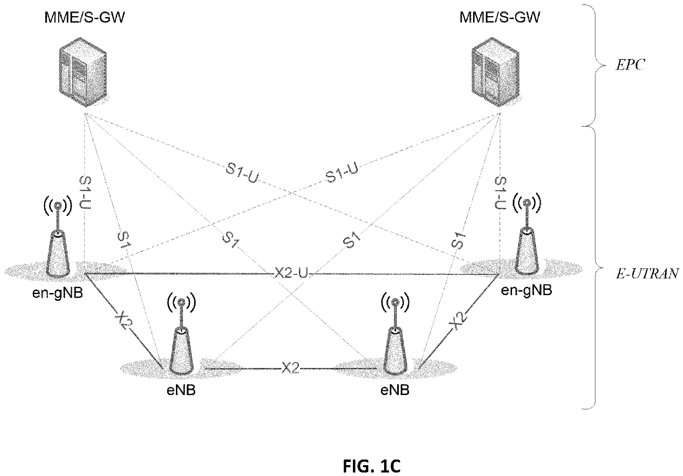

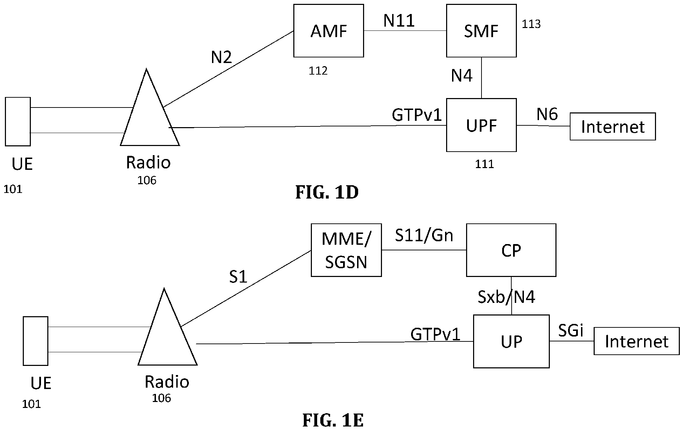

FIG. 1A is a block diagram of a system 100 for implementations as described herein. System 100 includes a NR UE 101, a NR gNB 106. The NR UE and NR gNB 106 are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuitry 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 includes instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit comprising of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE can be stationary or mobile. A UE includes: an access terminal, a terminal, a mobile station, a subscriber unit, a station, and the like. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, and the like), an entertainment device (e.g., a music device, a video device, a satellite radio, and the like), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as loT UEs. IoT UEs include, for example, robots/robotic devices, drones, remote devices, sensors, meters, monitors, cameras, location tags, and the like, that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs, can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN can be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which can be referred to as a CRAN and/or a vBBU. In these embodiments, the CRAN or vBBU can implement a RAN function split, such as a PDCP split, wherein RRC and PDCP layers are operated by the CRAN/vBBU and other L2 protocol entities are operated by individual RAN nodes; a MAC/PHY split where RRC, PDCP, RLC, and MAC layers are operated by the CRAN/vBBU and the PHY layer is operated by individual RAN nodes; or a "lower PHY" split where RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs can include one or more remote radio heads (RRH), and the gNB-CU 151can be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and can be similar to eNBs in an 3GPP architecture.

In some implementations, access to a wireless interface can be scheduled, wherein a scheduling entity (e.g.: BS, gNB, and the like) allocates bandwidth resources for devices and equipment in its service area or cell. As scheduling entity can be configured to schedule, assign, reconfigure, and release resources for one or more subordinate entities. In some examples, a UE 101 (or other device) can function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities can communicate utilizing the scheduled resources.

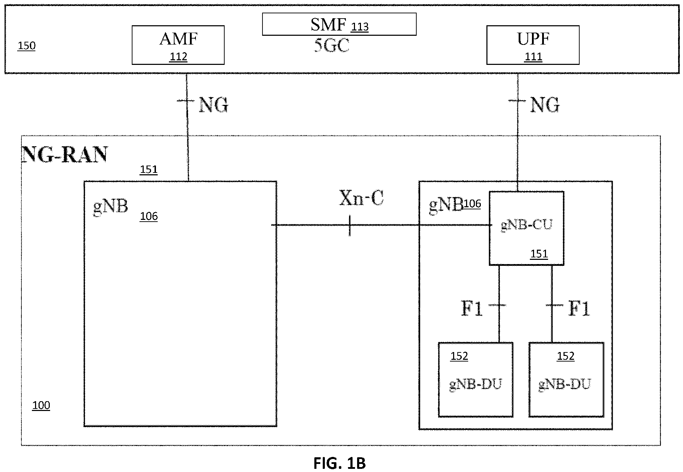

An NG-RAN (NG-Radio Access Network) architecture from 3GPP TS 38.401 is described below with respect to FIG. 1B. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

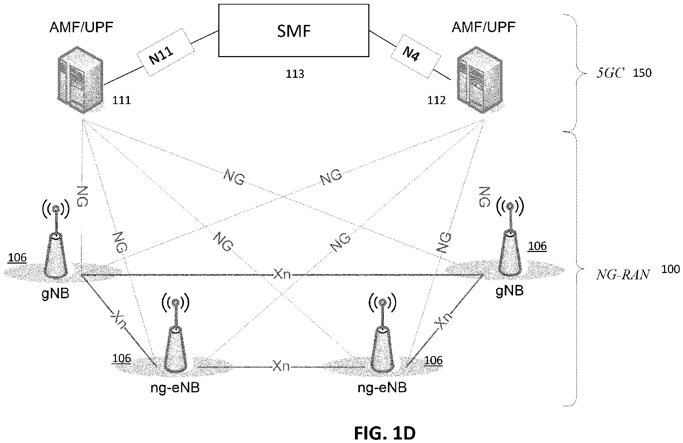

An E-UTRAN architecture is illustrated in FIG. 1D. The E-UTRAN comprises eNBs, providing the E-UTRAN U-plane (PDCP/RLC/MAC/PHY) and control plane (RRC) protocol terminations towards the UE. The eNBs are interconnected with each other by the X2 interface. The eNBs are also connected by the S1 interface to the EPC (Evolved Packet Core), more specifically to the MME (Mobility Management Entity) by the S1-MME interface and to the Serving Gateway (S-GW) by the S1-U interface. The S1 interface supports a many-to-many relation between MMEs/Serving Gateways and eNBs.

An E-UTRAN that supports an NG-RAN architecture is illustrated in FIGS. 1D-1E. An exemplary NG-RAN Radio node 106 is either: a gNB, providing NR user plane and control plane protocol terminations towards the UE; or an ng-eNB, providing E-UTRA user plane and control plane protocol terminations towards the UE. (3GPP TS 38.300 17.3.0.) As shown in Figure 1D, the gNBs and ng-eNBs are interconnected with each other by the Xn interface. In FIGS. 1D-1E, the NG-RAN Radio Node (e.g.: gNBs and/or ng-eNBs) are also connected by the NG interfaces to the 5GC, more specifically to the AMF 112 by the NG-C interface and to the UPF 111 by the NG-U interface. The gNB 106 and ng-eNB 106 host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers.

3GPP TS 23.501v18.2.0 [1] and 3GPP TS 23.502v18.2.0 [2] define network architecture where a UPF 111 or UP is connected over N6 or SGi LAN to the internet. The UE 101 traffic is routed using the core network to internet using the N6 or SGi. FIGS. 1A-1E show an exemplary network architecture in accord with these Technical Standards.

The core 5G network 150 includes AMF 112, other AMFs 112, a Session Management Function (SMF) 113, and a User Plane Function (UPF) 111. The AMF 112 acts as a control node that processes the signaling between the UEs 101 and the core 5G network 150 to provide QoS flow and session management. For example, the AMF 112 provides management for registration, connection management, reachability management, and mobility.

SMF 113 provides Session Management such as session establishment, modification and release, tunnel maintenance between UPF 111 and RAN node 106, UE IP address allocation and management, and traffic steering at UPF 111 to route traffic to proper destination.

User Internet protocol (IP) packets are transferred through the UPF 111. The UPF 111 provides UE IP address allocation, packet routing and forwarding, packet inspection, QoS handling for user plane, as well as other functions. The UPF 111 is connected to the IP Services 115 such as Internet, an intranet, an IP Multimedia Subsystem (IMS), a PS Streaming Service, and/or other IP services.

### Technological Environment and Related Technology

### I. Installing Multiple N6 or SGi LAN for treating a given traffic:

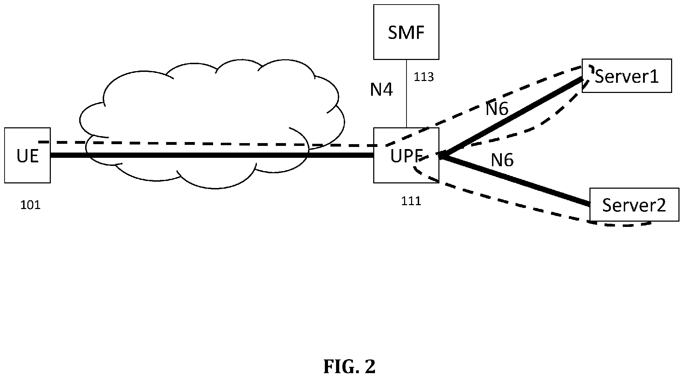

FIG. 2 shows UE 101 traffic that is routed to multiple N6 or SGi LAN for treatment. In this case, the UPF 111 receives the GTPv1 traffic containing payload sent by UE 101, analyzes it and then routes the traffic towards N6 or SGi LAN (server1). On receiving the same traffic from N6 or SGi LAN (server1), UPF 111 again analyses the traffic and then routes it towards the N6 or SGi LAN (server2).

### II. Session Charging

3GPP [3] describes the traffic counting and charging of the session over the N6 or SGi LAN. However, the specification is silent on how to identify if there are multiple N6 or SGi LAN involved for treating a given UE 101 traffic. In absence of such instructions or description, there are chances that the same UE 101 traffic can be charged twice by the UPF 111 as it is traversing the N6 or SGi LAN at UPF 111 more than once.

### III. Load Balancing

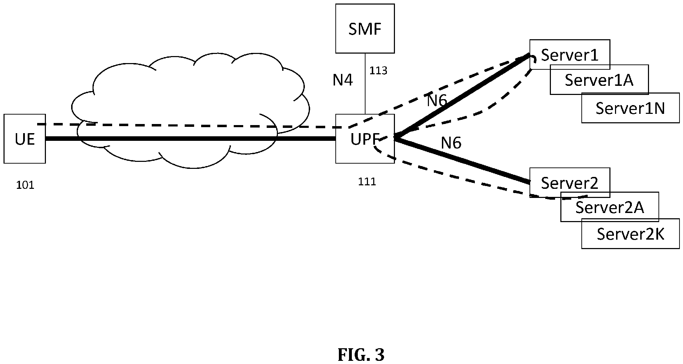

FIG. 3 shows a UPF 111 doing the load balancing among multiple server1 servers and/or server2 servers over N6 or SGi LAN.

Certain operators may do the load balance of UE 101 traffic over multiple servers (i.e. multiple server 1 servers), receive the traffic from them, and then load balance the UE 11 traffic over multiple servers (i.e. multiple server 2 servers) over N6 or SGi interfaces. Similarly, for the downlink traffic, the operator may want to again load balance the traffic over the multiple available servers. In absence of any description or clauses in the specification [3] on multiple N6 or SGi LAN, the operator may not be in the position to define a solution to handle UE traffic in such deployments.

For a given UE 101 source address, the UPF 111 can send the packets to a unique Securenet blade. Blades can be chosen based on order defined in configuration or round robin.

### IV. Health Check

In an implementation, a UE 101 can do a health check of different servers (server 1 and/or server 2 in FIG. 3) that are available over different N6 or SGi before handling the traffic towards or from them.

### Statement on Implementations

Implementations as described herein are configured to address the following operations.
- An operator can define and configure multiple N6 LAN to treat a given UE 101 traffic defined and described with respect to Section I above.
- The operator can define a network in such a way that the traffic is charged (defined in Section II above) only a single time, though it passes through the UPF 111 multiple times in a given direction.
- The operator can apply differentiated charging (defined in Section II above) for uplink and downlink directions
- The operator can execute load balancing of the UE traffic defined in Section III above.
- The operator can perform the health check of the available servers defined in Section IV above.

The setup can be configured as follows:
- There is no router in between UPF 111 and server.
- The connection between the UPF 111 and the server is trusted. This means, the server is capable of accepting a packet from the UPF 111 that does not belong to its MAC address.
- The server is capable of changing the VLAN of the packet

### Implementation 1

### I. Configuration

### A. UPF side Configuration

The configuration at UPF 11 comprises APN/DNN having two VRFs, VRF1 (apn_Internal) and VRF2 (apn_external). The apn-Internal has a list of VLANs configured, that it matches while receiving IP based traffic for a given PDR. As of the present disclosure, 3GPP[3] does not offer the use of VLAN for the IP traffic and only offers guides to use VLANs in ethernet based traffic.

Table 1 shows VLAN(s) configured for a given VRFs configured at APN (apn_Internal and apn_external).

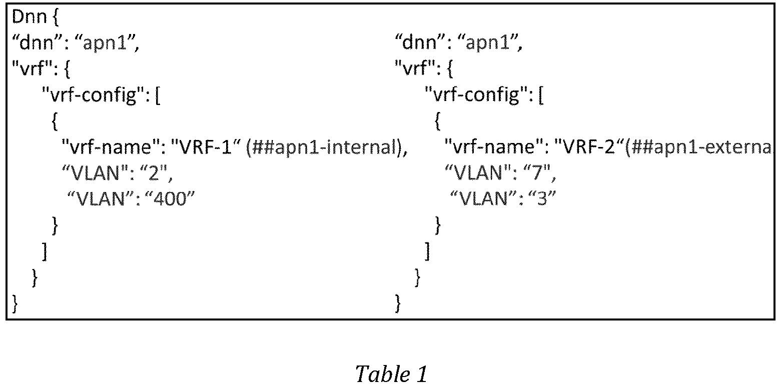

The apn1 comprises two tags: "apn1-internal" and "apn1-external" configured in the apn1. These tags are used in PFCP message as APN/DNN IE when CP has configuration flag "N6-Sgi-Type"="multiple" set inside the APN/DNN configuration (explained in section "CP Side Configuration" with respect to Table 3 herein).

While sending the traffic towards the N6 (or SGi) LAN, the UPF 111 is configured to insert a given VLAN ID into the packet. The VLAN ID can inform the server for a specific service and treatment that it is supposed to give. The configuration can also have MAC addresses. These MAC addresses (both Src_MAC and Dst_MAC) are situated at the UPF 111. It is used to be set in the packet that is sent by the UPF 111 towards the server. This helps the server to remain unaware, that is where the packet is to be sent back after treatment.

Table 2 show the connection ID configuration. Here, three connection ID are listed. Conn ID1 shows that the packet Source MAC (src_MAC) is set to MAC1 and destination MAC (Dst_MAC) is set to MAC2 with VLAN ID of the packet set to 101.

**Table 2:Connection ID Table showing MAC and VLAN**

| |
|---|
| ```
          Connection [{
          *Connection Id : <Conn ID1> {
             Src_MAC: MAC1
             Dst_MAC: MAC2
             Local N6 Address: $N6_IPAddress ## Address towards server1
             nexthop address (IPv4) <ipaddress> [insert_vlan VLAN ID 101 \| remove_vlan)
          }
          Connection Id : <Conn ID2> {
             Src_MAC: UPF_DEFAULT
             Dst_MAC: SERVER2_DEFAULT
             Local N6 Address: $N6_IPAddress ## Address towards server1
             nexthop address (IPv4) <ipaddress> [insert_vlan VLAN ID 3 \| remove_vlan]
          }
          Connection Id : <Conn ID3> {
             Src_MAC: MAC3
             Dst_MAC: MAC4
             Local N6 Address: $N6_lPAddress ## Address towards server2
             nexthop address (IPv4) <ipaddress> [insert_vlan VLAN ID 105 \| remove_vlan]
          }
``` |

Conn ID2 shows that the packet Source MAC (Src_MAC) is set to UPF_DEFAULT and destination MAC to SERVER2_DEFAULT with VLAN ID of the packet set to 3.

Conn ID3 shows that the packet Source MAC (Src_MAC) is set to MAC3 and destination MAC (Dst_MAC) is set to MAC4 with VLAN ID of the packet set to 105.

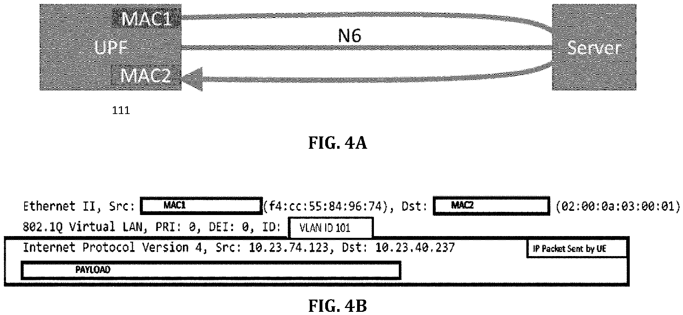

FIG. 4A shows the sending and receiving of the packets and FIG. 4B shows the sample packet that is sent on the interface, showing the VLAN ID and MAC address from the Connection ID table.

### B. CP side Configuration

The CP is configured so that the APN is configured to have multiple N6 (or SGi) LAN (using tag, "N6-Sgi-Type"="multiple"). For UL and DL traffic routing, the CP is configured to have the connection id configured in this APN configuration. CP creates the number of PDRs based on the configuration given in Table 3.

**Table 3**

| |
|---|
| ```
                  Dnn {
                  "dnn": "apn1",
                   "N6-Sgi-Type: "multiple"
                   [
                   {//for apn1-internal
                   "use-dnn-name-on-PFCP" :"apn1-internal",
                    "UL-PDR-CONN-ID" :
                     [{ "source-interface: "N3",
                      "destination-interface": "N6/SGi",
                      "CONN-ID" :"ConnID1" //PDR ID =199
                     }
                     { "source-interface: "N6/SGi")
                      destination-interface": "N6/SGi",
                      "CONN-ID" :"ConnID2" //PDR ID =200
                     }]
                     "DL-PDR-CONN-ID" :
                     [{ "source-interface: "N6/SGi",
                      destination-interface": "N3",
                      "CONN-ID" : "use-outer-header-creation", //PDR ID =2
                     }]
                    }
                    {//for apn1-external
                   "use-dnn-name-on-PFCP" :"apn1-external",
                    "DL-PDR-CONN-ID" :
                     [{ "source-interface: "N6/SGi",
                      "destination-interface": "N6/SGi",
                      "CONN-ID" :"ConnID3" //PDR ID =202
                     }]
                    }
                  ]
``` |

While creating the PDRs, the configuration is referred as under:
- The DNN name to be used on PFCP is identified by a tag="use-dnn-name-on-PFCP"
- For each PDR, the source interface type, destination interface type and connection id value to be used is configured.
- If connection-id is not required, then the flag "use-outer-header-creation" is used.
- Table 4,Table 5, Table 6 and Table 7 shows the PDR formed due to configuration shown in Table 3.

### II. Setup and Working for UL Traffic

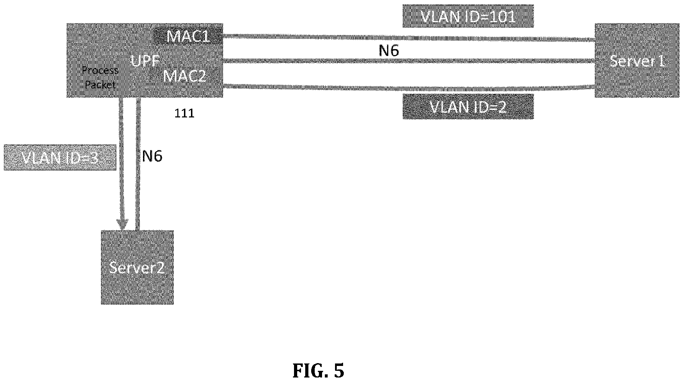

FIG. 5 shows the setup for UL traffic, where packet is sent by UPF 111, towards the server 1 with MAC1 as Source, MAC2 as destination and VLAN ID=101 as the VLAN (Conn ID=1 in Table 2). The server 1 processes the packet, sets VLAN as 2 and then is routed back to the UPF by virtue of the MAC. The UPF 111 matches the packet (based on configuration of VLAN for apn-internal given in Table 1, as it matches VLAN ID=2). On receiving the packet back, the UPF 111 processes the packet again and re-create and forwards it to the server 2 with VLAN ID=3 as the VLAN (Conn ID=2 in Table 2). The PDR and FAR definition based on which forwarding happens is explained below.

The PDR is installed by the CP, so that the PDR can choose the MAC and VLAN from the Connection ID table to be forwarded towards the server 1. For UPF 111 to server 1, the PDR shown in Table 4 is installed, where any packet received over GTPv1 (e.g. N3 ) is forwarded to server 1 using the Connection ID 1 (ConnID1).

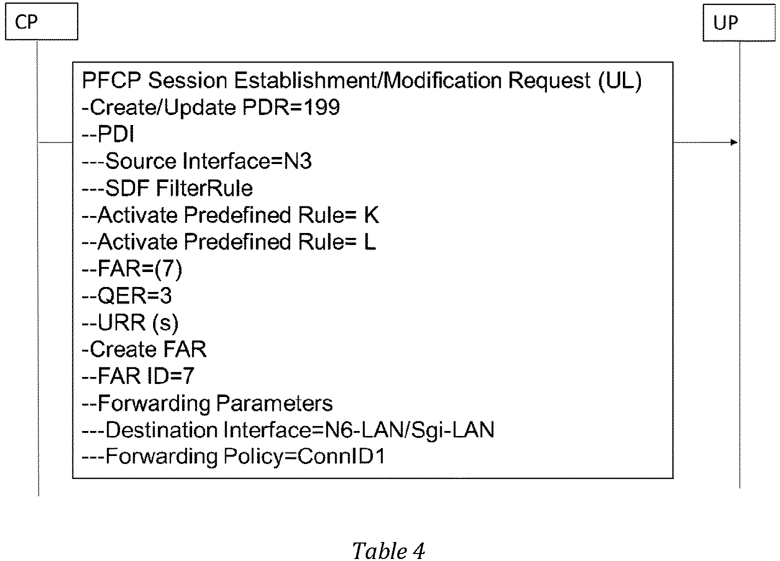

The PDR is installed by the CP so that it can receive the packet from the server 1 Table 5. The PDR includes the Network instance as apn1-internal to tell the UPF to match the VLAN ID configured in the APN configuration (see FIG. 4 and Table 1). After matching, the packet is treated as per the predefined rules installed by this PDR and is forwarded to server2 using the Connection ID 2 (ConnID2).

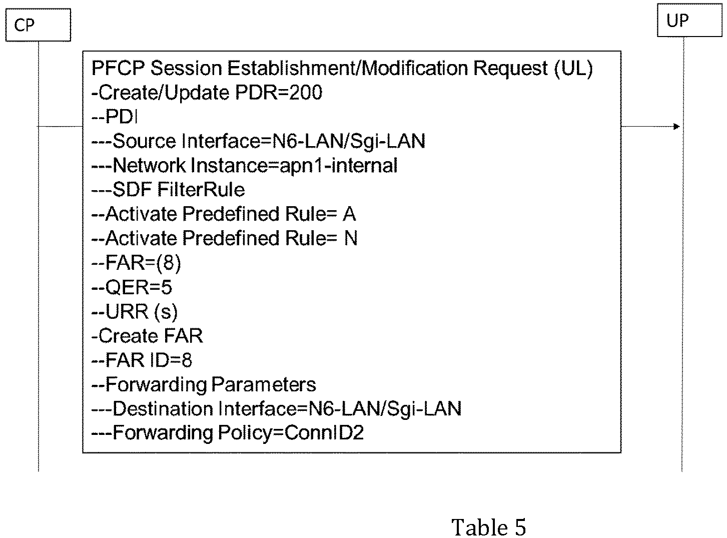

### III. Setup and Working for DL Traffic

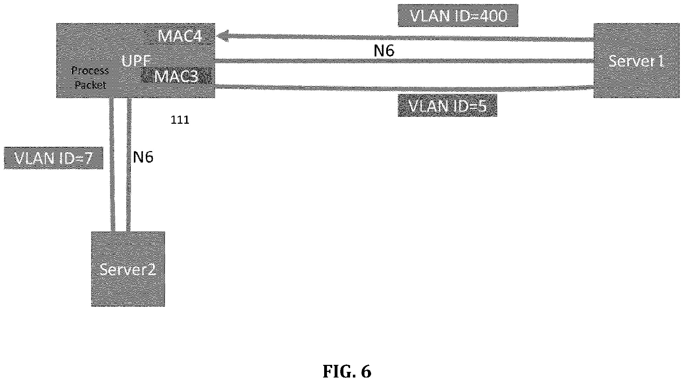

FIG. 6 shows the setup for DL traffic, where packet is sent by server 2, towards the UPF 111 with VLAN ID=7. The UPF 111 processes the packet (matches with VLAN=7 under apn-external in Table 1) and then forwards it toward the server 1 by setting, MAC3 as Source MAC, MAC4 as destination MAC and VLAN ID=5 as the VLAN (Given in Table 2 with Conn ID=3). The server 1 processes the packet, sets VLAN ID as 400 and then is routed back to the UPF 111 by virtue of the MAC. UPF 111 matches the packet with VLAN=400 given under apn-external (Table 1) and then forwards it towards the GTP-U interface(e.g. N3) based on the PDR and FAR definitions explained below.

The PDR is installed by the CP, so that UPF 111 can receive the packet from N6 LAN, then choose the MAC and VLAN from the Connection ID table to be forwarded towards the server 1. For receiving packet from server 2 and then forwarding to server 1, the PDR shown in Table 6 is installed, where any packet received over N6 (or SGi) (OR SGI) is forwarded to server1 using the Connection ID 1 (ConnID1).

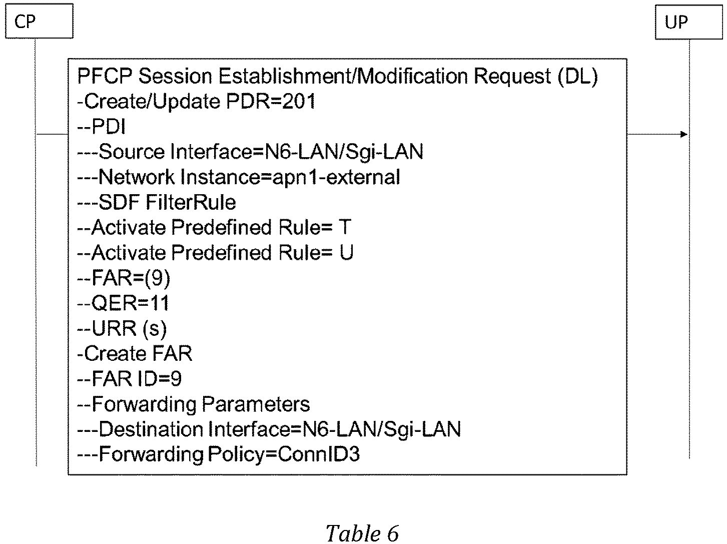

The PDR is installed by the CP so that it can receive the packet from the server 1 (Table 7). The PDR includes the Network instance as apn1_Internal to tell the UPF 111 to match the VLAN ID configured in the APN configuration (see Table 1). After matching, the packet is treated as per the predefined rules installed by this PDR, and is forwarded to GTPv1 (e.g. N3) with outer header creation.

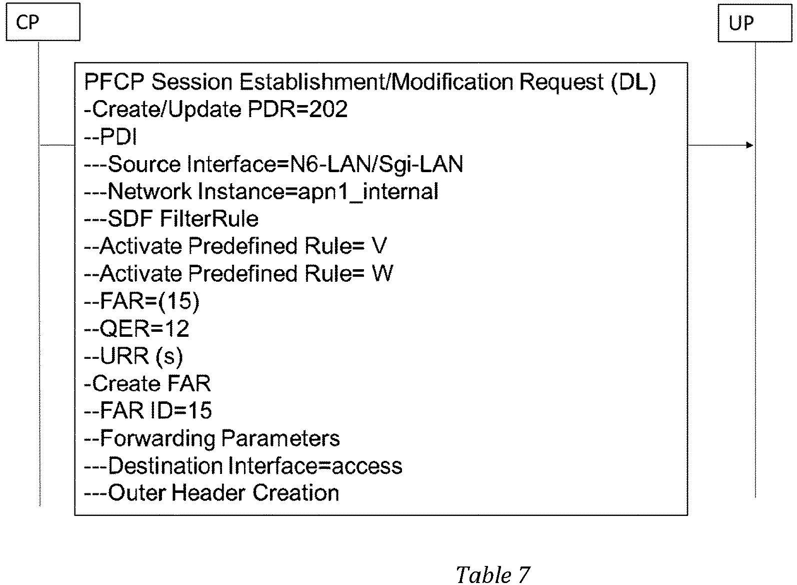

### IV. Session Charging

3GPP [4] has defined executing usage counting on the N6 or SGi interface. However double counting is to be avoided (if required by operator). In such a case, operator can choose when to do the charging:

For the UL Traffic, operator can choose one of the following procedure for the counting:
1. While sending towards server1.
2. While sending towards server 2.

For the DL Traffic, operator can choose one of the following procedure for the counting:
1. While receiving from server 2.
2. While receiving from server 1.

The operator's configuration at CP can be configured to select the URR only on the PDR where the charging is required.

### V. Load Balancing

While selecting the server 1 (or server 2), UPF 111 has a list of connection IDs and the load balancing algorithm to be used (Table 8). The algorithm can be round robin or least loaded or none. UPF maintains the count of number of sessions that are forwarded towards every server and then apply the algorithm. The round robin is configured to select every new session to be routed to a new server in round robin basis, chosen from the configured server list.

Least loaded is configured to select every new session to be routed to the server that has least number of sessions which this UPF 111 has sent for handling.

### If none is configured, then the first entry is used.

**Table 8: Configuration of Load balancing of the sessions and health check of servers**

| |
|---|
| ```
  Connection [{
  *Connection Id : <Conn ID1> {
  Algorithm=round_robin \| least-loaded \| none
  HealthCheckRequired : Yes \| No
  Server2A
    {
    Src_MAC: MAC1
    Dst_MAC: MAC2
    Local N6 Address: $N6_IPAddress ## Address towards server1
    nexthop address (IPv4) <ipaddress1> [insert_vlan VLAN ID1 \| remove_vlan]
  }
  Server1B
    {
    Src_MAC: MAC6
    Dst_MAC: MAC7
    Local N6 Address : $N6_IPAddress ## Address towards server1
    nexthop address (IPv4) <ipaddress1> [insert_vlan VLAN 106 \| remove_vlan]
  }
  Server1N
    {
    Src_MAC: MACn
    Dst_MAC: MACn+1
    Local N6 Address : $N6_IPAddress ## Address towards server1
    nexthop address (IPv4) <ipaddress1> (insert_vlan VLAN ID-N \| remove_vlan]
  }
``` |

### VI. Health Check of the Servers

UPF can be configured to do the health check of the servers on the N6 or SGi. 3GPP [3] does not recommend any health check for the available servers. In such a case, if health check is configured, the UPF is configured to use the BFD protocol [4] to check if the server is available. If it is not available, then, the server is not considered for routing the current packet. BFD can be used to do the health check of the Securenet blades.

### Failure handling when no servers are available:

As shown with respect to Table 8, it may be that there are no servers available for a given connection id. In such a case, while receiving the packet that matches a PDR, the packet can be dropped and an alarm raised as the action specified by the operator cannot be fulfilled.

### Solution 2

### I. Configuration

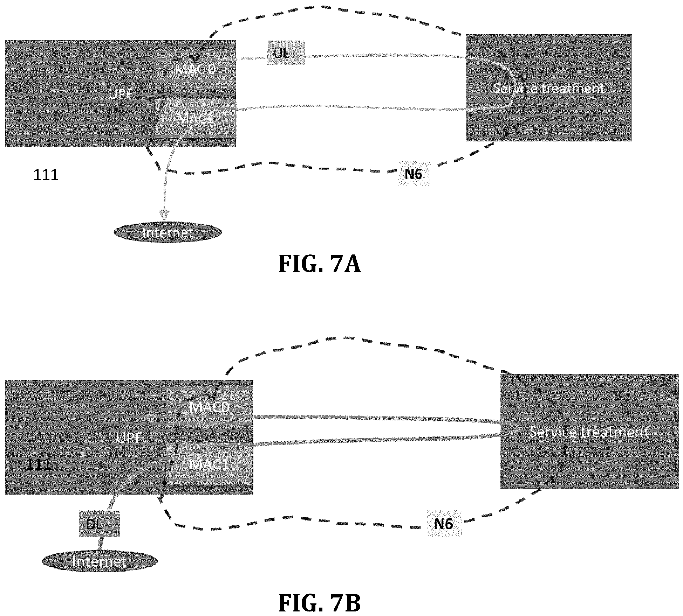

FIG. 7A and FIG. 7B shows the logical N6 or SGi connection that involves the following in UL and DL directions respectively:
- FIG. 7A shows that for the UL direction, **MAC0→Service treatment→MAC1→Internet** is considered as N6 or SGi
- FIG. 7B shows that for the DL direction, **Internet→MAC1→ Service treatment** → **MAC0** is considered as N6 (or SGi).

While sending and receiving the packets the VLAN ID and MAC Address are picked from the L2 switching table. The sample packets that are send in UL direction are shown in FIG. 20 and those that are sent in DL direction are shown in FIG. 23 based on the treatment defined in the below sections. Table 9a and Table 9b shows the L2 switching table configuration. Table 10a and Table 10b shows the additional L2 Action that is linked to the DNN.

**Table 9a**

| |
|---|
| ```
                L2_Switching_table [{
                Algorithm=round_robin \| least_loaded \| none
                BFDHealthCheckRequired : Yes (BFD_EchoProfile)\| No ## if Yes is
                configured, use BFD with src and dst as eth0
                "UL_SRC_MAC": MAC1
                "UL_DST_MAC": MAC2
                *L2_Connection Id [0]: <Connection_ID_1 > {
                Server_Blade2
                 {
                 [insert_vlan VLAN ID1 102]
                  }
                Server_Blade1
                 {
                  [insert_vlan VLAN ID1 101 ]
                }
                Server_BladeN
                 {
                  [insert_vlan VLAN ID1 100+N ]
                  }
               }]
``` |

**Table 9b**

| |
|---|
| ```
                       *L2_Connection Id [1]: <              >
                       {
                        Server_Blade2
                         {
                         [insert_vlan VLAN ID1 202]
                         }
                       Server_Blade1
                         {
                          [insert_vlan VLAN ID1 201 ]
                       }
                       Server_BladeN
                         {
                         [insert_vlan VLAN ID1 200+N ]
                         }
                       }]
``` |

### Tables 9a-9b: L2 Switching Table for inserting VLAN

**Table 10a**

| |
|---|
| ```
              "addition_L2_action" : "action1" ##optional config
                  "direction": UL
                   {
                         L2_switching_table[0] ; // Refers to the connection-id to be applied
                         {"RECV_ACTION_ON_MAC2": MATCH_VLAN: 202, 201}
                    }
                                            MATCH_VLAN: 102, 101
``` |

**Table 10b**

| |
|---|
| ```
                    "dnn-list": [ { "dnn":
                    "campus.m37.mnc006.mcc262.gprs",
                    "n6-additional-L2-actions" : "action1"
                    }
                    ]
``` |

### Tables 10a and 10b Additional L2 Action that is linked to the DNN.

### II. Setup and Working for UL Traffic

Table 11a shows PDR installation for forwarding of a packet towards the internet for UL traffic.

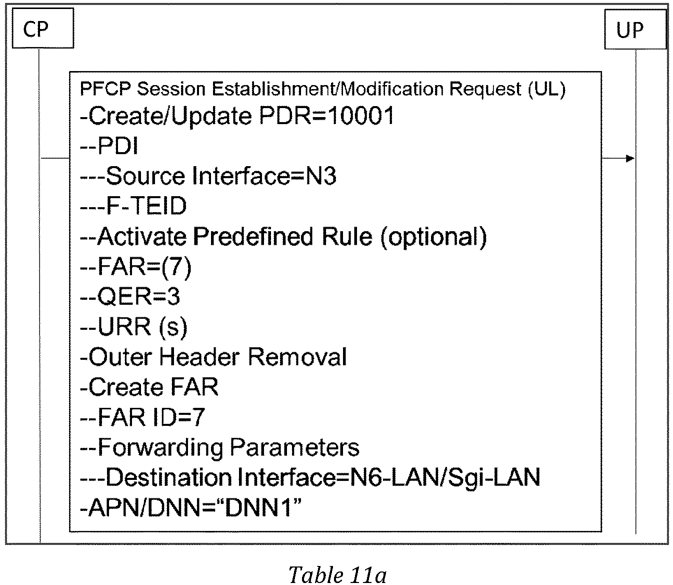

Table 11b shows another PDR installation for forwarding of packet towards the internet for UL traffic.

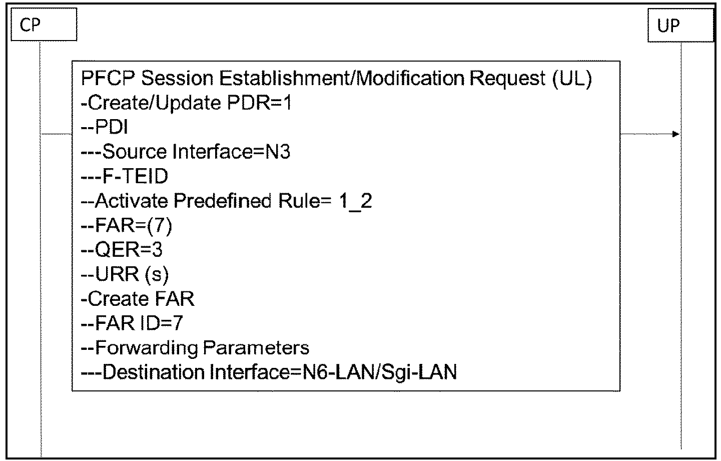

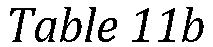

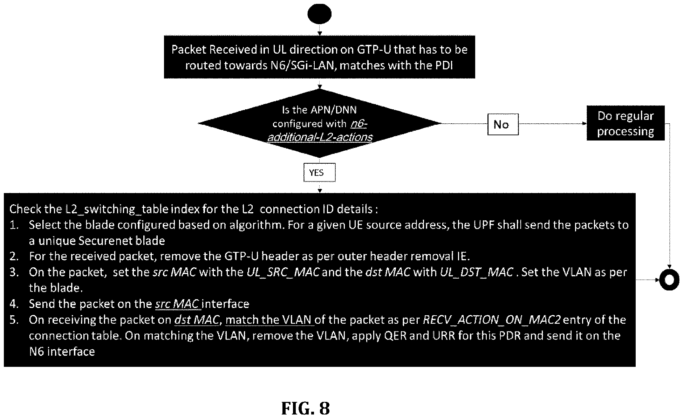

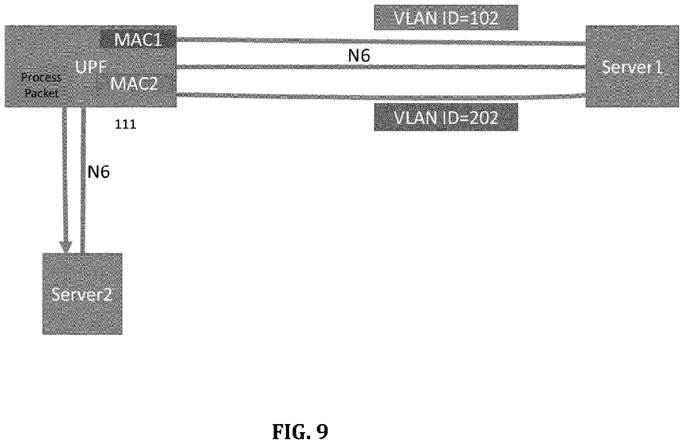

FIG. 8 illustrates a flow chart for handling UL traffic. FIG. 9 shows a packet flow for the UL traffic. On receiving the N3 traffic for specific DNN that is to be routed to N6 (or SGi)LAN, is configured to match the UL traffic as done regularly using PDI. On PDI match, UPF is configured to check if the DNN has optional config to do L2 switching on UL direction based on "n6-additional-L2-actions" . If so:
- UPF takes MAC1 as configured (src MAC Packet)
- UPF takes MAC2 as configured (dst MAC Packet)
- It inserts VLAN into packet as suggested in L2 switching table
- UPF sends the packet (after removing N3 header as instructed in PDR as part of outer header removal IE) on the MAC1
- On receiving packet on MAC2, it matches the VLAN list configured, remove the VLAN, apply QER/URR and then send out matched packet on N6 (or SGi) interface.

Exemplary Traffic Steering Policy is as follows.

```
 "Policy": {
 "upfpolicy": {
 "ruleSets": [
  {
   "id": "RB1",
   "rules": [
    {
     "ruleGroup": "RG1",
     "precedence": 15,
     "trafficHandlingRules": [
      "thrOffline_UL_N6_1_2"
     ],
     "status": "active",
    }
   ],
  },
 ],
               "pccRules": [
  {
   "ruleGroup": "RG1",
   "pdrld": 199,
   "filterList": [
    "rd2",
    "rd3",
    "rd4"
   ],
   "trafficControlStatus": "enableUplink"
  }
                ]
               "packetFilters": [
  {
   "filterId": "rd2",
   "flow Info": {
    "flowDescription": "permit out ip from any to any",
    "flowDirection": "uplink",
   },
                     }
                     ]
               "trafficHandlingRules": [
  {
   "thrId": "thrOffline UL_N6_1_2",
                     "forwardingPolicy": [
    CONN ID1
                      ByPassFAR
   L
   "usageReportRules": [
    3
   ],
   "additionalRules": [
    50
   ],
   "qosRules": [
    3
   ]
  },
                ]
           }
          }
```

### III. Setup and Working for DL Traffic

Table 12a shows PDR installation for forwarding of packet towards the internet for DL traffic.

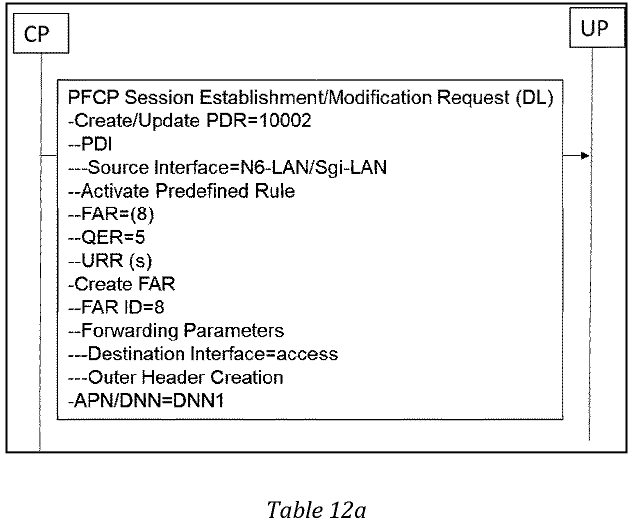

Table 12b shows another PDR installation for forwarding of packet towards the internet for DL traffic.

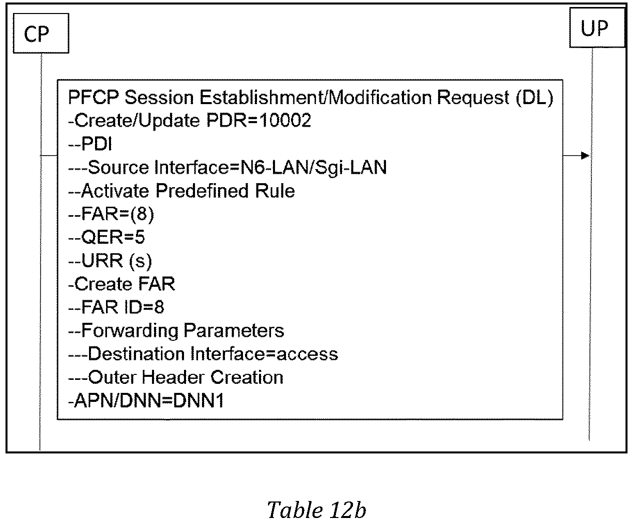

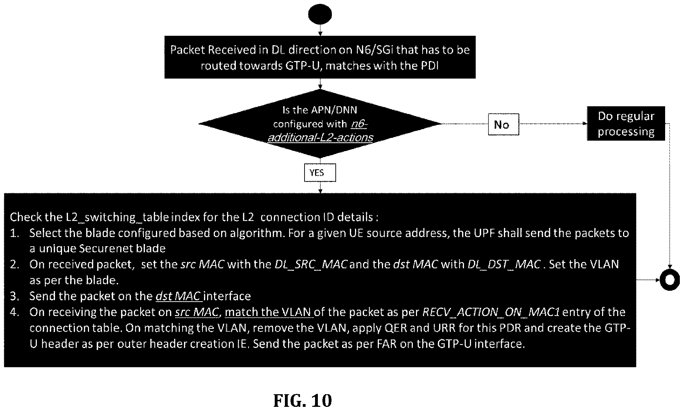

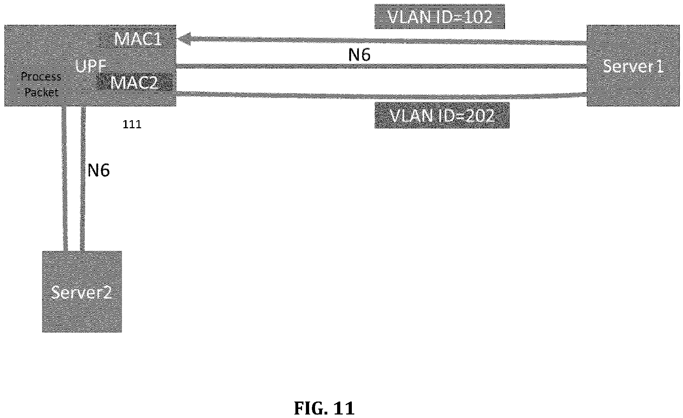

FIG. 10 is a flow chart showing the treatment of the DL traffic. FIG. 11 illustrates a packet flow for DL traffic.

On receiving the N6 (or SGi) traffic for a DNN, that has to be routed to N3, UPF matches the DL traffic as done regularly using PDI

On PDI match, UPF checks if the DNN has optional config to do the L2 switching on DL direction based on "n6-additional-L2-actions". If so:
- UPF takes MAC1 as configured (as dst MAC of packet)
- UPF takes MAC2 as configured (as src MAC of Packet)
- It inserts VLAN into packet as suggested in L2 switching table
- UPF sends the packet on the MAC2
- On receiving packet on MAC1, it matches the VLAN list configured, remove the VLAN and then send out matched packet on N3 interface as per outer header creation.

Exemplary Traffic Steering Policy 2-3 is as follows

```
"Policy": {
 "upfpolicy": {
 "ruleSets": [
  {
   "id": "RB2",
   "rules": [
    {
     "ruleGroup": "RG2",
     "precedence": 16,
     "trafficHandlingRules": [
      "thrOffline_UL_N6_2_3"
     ],
     "status": "active",
    }
   ],
  },
 ],
               "pccRules": [
  {
   "ruleGroup": "RG2",
   "pdrId": 200,
   "filterList": [
    "rd2",
    "rd3",
    "rd4"
   ],
   "trafficControlStatus": "enableUplink"
  }
                ]
               "packetFilters": [
  {
   "filterId": "rd2",
   "flowInfo": {
    "flowDescription": "permit out ip from any to any",
    "vlanList": "101", "102","201","202"
    "flowDirection": "uplink",
   },
                     }
                     ]
               "trafficHandlingRules": [
  {
   "thrld": "thrOffline_UL_N6_2_3",
                     //Forward as per FAR,
   "usageReportRules": [
    4
   ],
   "additionalRules": [
    51
   ],
   "qosRules": [
    4
   ]
  },
                ]
           }
          }
```

Exemplary Traffic Steering Policy 3-2 is as follows:

```
 "Policy": {
 "upfpolicy": {
 "ruleSets": [
  {
   "id": "RB3",
   "rules": [
    {
     "ruleGroup": "RG3",
     "precedence": 17,
     "trafficHandlingRules": [
      "thrOffline_UL_N6_3_2"
     ],
     "status": "active",
    }
   ],
  },
 ],
               "pccRules": [
  {
   "ruleGroup": "RG3",
   "pdrld": 201,
   "filterList": [
    "rd2",
    "rd3",
    "rd4"
   ],
   "trafficControlStatus": "enableDownlink"
  }
                ]
               "packetFilters": [
  {
   "filterId": "rd2",
   "flowInfo": {
    "flowDescription": "permit out ip from any to any",
    "vlanList": "none"
    "flowDirection": "downlink",
   },
                     }
                     ]
               "trafficHandlingRules": [
  {
   "thrId": "thrOffline UL_N6_3_2",
                     "forwardingPolicy": [
    CONN ID 2
                      ByPassFAR
   ],
   "usageReportRules": [
    4
   ],
   "additionalRules": [
    51
   L
   "qosRules": [
    4
   ]
  },
                ]
           }
          }
```

Exemplary Traffic Steering Policy 2-1 is as follows:

```
"Policy": {
 "upfpolicy": {
 "ruleSets": [
  {
   "id": "RB4",
   "rules": [
    {
     "ruleGroup": "RG4",
     "precedence": 18,
     "trafficHandlingRules": [
      "thrOffline_UL_N 6_2_1"
     ],
     "status": "active",
    }
   ],
  },
 ],
               "pccRules": [
  {
   "ruleGroup": "RG4",
   "pdrId": 202,
   "filterList": [
    "rd2",
    "rd3",
    "rd4"
   ],
   "trafficControlStatus": "enableDownlink"
  }
                ]
               "packetFilters": [
  {
   "filterId": "rd2",
   "flowInfo": {
    "flowDescription": "permit out ip from any to any",
    "vlanList": "101,102,202,203"
    "flowDirection": "downlink",
   },
                     }
                     ]
               "trafficHandlingRules": [
  {
   "thrld": "thrOffline UL_N6_2_1",
                     //use outer header creation of FAR
   "usageReportRules": [
    5
   ],
   "additionalRules": [
    52
   L
   "qosRules": [
    5
   ]
  },
                ]
           }
          }
```

### IV. Mapping Criteria for UL and DL traffic

For mapping, packets need to match once only in UL and DL direction with the PDI of the PDR. On receiving the UL packets back on MAC2, (before routing it on N6 or SGi towards internet), UP is configured to keep a check of UE IP Address, map it with N3 F-TEID, apply URR and QER. On receiving the DL packets back on MAC1, (before routing it on N3 on specific F-TEID), UP is configured to keep a check of UE IP Address, map it with N3 F-TEID given Outer header creation, apply URR and QER.

### V. Session Charging

For the UL Traffic, on receiving the UL packets back on MAC2, (before routing it on N6 (or SGi) towards internet), the operator side can count packets.

For the DL Traffic, on receiving the DL packets back on MAC1, (before routing it on N3 on specific F-TEID) the operator side can count packets.

### VI. Load Balancing

Tables 9a-9b show the L2 switching table. As explained hereinabove, the algorithm can be round robin or least loaded or none. UPF 111 is configured to maintain the count of number of sessions that are forwarded towards every L2 blade and then apply the algorithm.

Round robin is configured select every new session to be routed to a new blade in round robin basis, chosen from the configured list.

Least loaded is configured to select every new session to be routed to the blade that has least number of sessions which this UPF 11 has sent for handling.

If none is configured then the first entry is used.

### VII. Health Check of the Servers

Tables 9a-9b also show, if the health check is to be done towards the blade or not (using *BFDHealthCheckRequired* flag in the configuration shown). UPF 111 is configured to do the health check of the blades on the N6 or SGi if configured. 3GPP [3] as of the present disclosure does not recommend any health check for the available servers. In such a case, if health check is configured, the UPF 111 is configured to use the BFD protocol [4] to check if the server is available. If it is not available, then, the server is not considered for routing the current packet.

Configuration of BFD Profile can be as follows in Table 13:

**Table 13**

| | | | |
|---|---|---|---|
| FRR defines BFD profile as under for echo that shall be used: | | | |
| **bfd** | | | |
| | **echo profile** BFD-EchoProfile | | |
| | | interval 20 | |
| **•interval 20:** | | | This sets the transmit interval to 20 milliseconds. Range 1-255 ms. (Default 50 ms) |
| | | | : This sets the detection time multiplier to 4. The detection time is calculated by multiplying the transmit interval with the multiplier. In this case, if the transmit interval is 20 milliseconds, the detection time will be 80 milliseconds (20 * 4). Range 1-255 (Default 3) |

Setting and Sending of the BFD Echo can be as follows and shown in Table14.

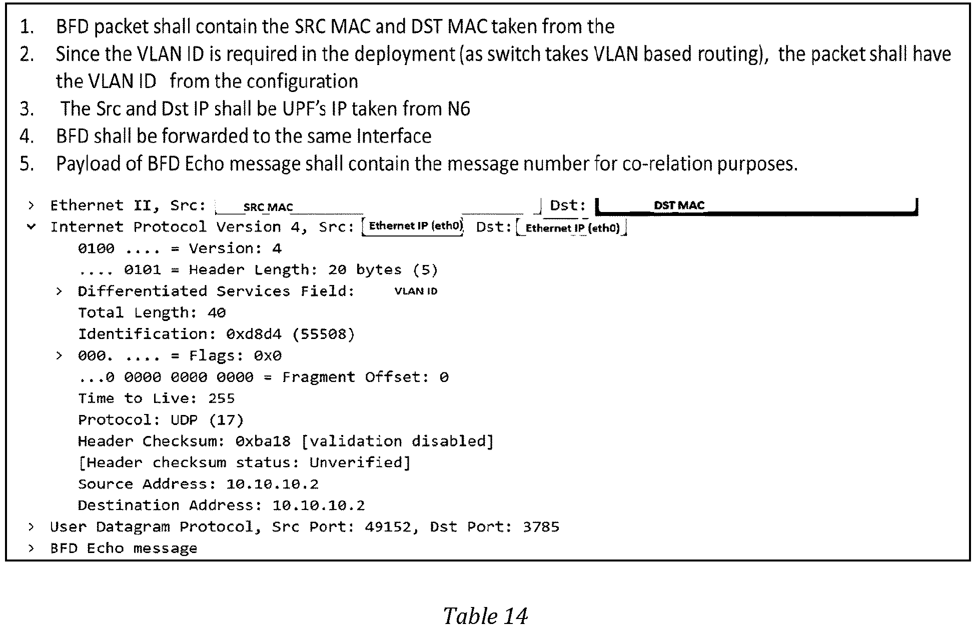

### Advantages

Implementation as described herein offer advantages that are not described or provided for in technical specifications referenced herein. Exemplary, non-limiting advantages include:
(a) Implementations described herein offer the traffic routing and handling when a given session is to be treated by services offered in multiple N6 or SGi-LANs.
(b) Implementations offer avoidance of double charging of the traffic when the traffic passes through multiple N6 or SGi.
(c) Implementations offer load balancing of the user traffic to different available servers if configured on N6 or SGi, which are not currently defined by 3GPP [3] specifications as of the present disclosure.
(d) Implementations offer a health check mechanism of the available servers on the N6.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the present disclosure.

## Claims

1. A system comprising:
a Session Management Function (SMF) connected to a User Plane Function (UPF) or a Control Plane (CP) connected to a User Plane (UP) by an N4 interface;
wherein the UP is connected to an SGi Local Access Network (LAN) by an SGi interface;
wherein the UPF is connected a N6 LAN by an N6 interface;
wherein the system is configured for traffic routing and handling a session for a plurality of N6 LANs;
wherein the UPF is preferably configured with an Access Point Name (APN)/Data Network Name (DNN) having two Virtual Routing and Forwarding (VRFs), a VRF1 (apn_Internal) and a VRF2 (apn_external); and
wherein the UPF is preferably configured to send the traffic towards the N6 LAN or SGi LAN, the UPF being configured to insert a Virtual LAN (VLAN) ID into a VRF packet, and wherein the VLAN ID is configured to inform a server for a specific service and treatment.

2. The system of claim 1, wherein the UPF is configured to insert a Media Access Control (MAC) address.

3. The system of any of the above claims, wherein the UPF is configured to at least, in the Uplink:
send the packet towards a first server with a MAC1 as Source, a MAC2 as destination and a VLAN ID=101 as the VLAN, the first server being configured to process the packet, set the VLAN as VLAN 2 and then route the packet back to the UPF by virtue of the MAC; and
match the VLAN 2 packet, process the packet again, and re-create and forward the packet to a second server with a VLAN ID=3 as the VLAN.

4. The system of any of the above claims, wherein the UPF is configured to at least, in the Downlink:
process a packet sent by a second server towards the UPF; and
forward the packet towards a first server by setting the MAC as MAC3 for a Source MAC, setting the MAC as MAC4 for a Destination MAC, and set the VLAN as VLAN ID=5, wherein the first server processes the packet, sets VLAN ID as 400 and then is routed back to the UPF.

5. The system of any of the above claims, wherein the system is configured for load balancing user traffic to different available servers when configured on the N6 interface or the SGi interface.

6. The system of any of the above claims, wherein the system is configured to prevent double charging of traffic when the traffic passes through the plurality of N6 or SGi interfaces.

7. The system of any of the above claims, wherein the system is configured to execute a health check for available servers on the N6 interface.

8. The system of any of the above claims, wherein the CP is configured so that the APN is configured to have multiple N6 LAN interfaces or multiple SGi LAN interfaces.

9. A method comprising for a system Session Management Function (SMF) connected to a User Plane Function (UPF) or a Control Plane (CP) connected to a User Plane (UP) by an N4 interface; the UP connected to an SGi Local Access Network (LAN) by an SGi interface; the UPF connected a N6 LAN by an N6 interface, the method comprising:
configuring the system for traffic routing and handling a session with a plurality of N6-LANs;
the method preferably further comprising: configuring the UPF with an Access Point Name (APN)/Data Network Name (DNN) having two Virtual Routing and Forwarding (VRFs) comprising a VRF1 (apn_Internal) and a VRF2 (apn_external); and
the method preferably further comprising:
inserting, by the UPF, a Virtual LAN (VLAN) ID into a VRF packet, wherein the VLAN ID is configured to inform a server for a specific service and treatment; and
sending, by the UPF, the traffic towards the N6 LAN or SGi LAN.

10. The method of claim 9, further comprising: inserting, by UPF, a Media Access Control (MAC) address; and
the method preferably further comprising:
sending, by the UPF in the Uplink, the packet towards, a first server with a MAC1 as Source, a MAC2 as destination and a VLAN ID=101 as the VLAN, the first server being configured to process the packet, set the VLAN as VLAN 2 and then route the packet back to the UPF by virtue of the MAC;
matching the VLAN 2 packet, processing the packet again; and
re-creating and forwarding the packet to a second server with a VLAN ID=3 as the VLAN.

11. The method of claim 10, further comprising:
processing, by the UPF in the Downlink, a packet sent by a second server towards the UPF;
forwarding the packet towards a first server by setting the MAC as MAC3 for a Source MAC; and
setting the MAC as MAC4 for a Destination MAC and setting the VLAN as VLAN ID=5, wherein the first server processes the packet, sets VLAN ID as 400 and then is routed back to the UPF.

12. The method of any of claims 9-11, further comprising: load balancing user traffic to different available servers when configured on the N6 interface or the SGi interface.

13. The method of any of claims 9-12, further comprising: preventing double charging of traffic when the traffic passes through the plurality of N6 or SGi interfaces.

14. The method of any of claims 9-13, further comprising: executing a health check for available servers on the N6 interface.

15. The method of claims 9-14, further comprising: configuring the CP so that the APN has multiple N6 LAN interfaces or multiple SGi LAN interfaces.
